# EUROPEAN PATENT APPLICATION

(11) **EP 3 509 060 A1**
(43) Date of publication of application: **10.07.2019**
(21) Application number: 17846147.1
(22) Date of filing: 17.08.2017
(51) Int. Cl.: G10L 15/22

(54) **INFORMATION PROCESSING DEVICE, INFORMATION PROCESSING METHOD, AND PROGRAM**

(30) Priority: 31.08.2016 JP 2016170308
(71) Applicant: Sony Corporation, Tokyo 108-0075 (JP)
(72) Inventor: KAWANO Shinichi, Tokyo 108-0075 (JP); TAKI Yuhei, Tokyo 108-0075 (JP)
(74) Representative: MFG Patentanwälte Meyer-Wildhagen Meggle-Freund Gerhard PartG mbB
(86) International application number: PCT/JP2017/029493
(87) International publication number: WO 2018/043139

(57) **Abstract**

The present disclosure relates to an information processing apparatus, a method for processing information, and a program capable of performing voice recognition with higher accuracy.

A word string representing utterance content is obtained as a voice recognition result by performing voice recognition on voice information, and at the time when the voice recognition is performed on the voice information, a confidence level of each word recognized as the voice recognition result, which is an index representing a degree of reliability of the voice recognition result, is obtained. Then, a phrase unit including a word with a low confidence level is determined, and voice recognition result information from which the phrase unit is recognized is output together with the voice recognition result. The present technology can be applied to, for example, a voice recognition system that provides voice recognition processing via a network.

## Description

### TECHNICAL FIELD

The present disclosure relates to an information processing apparatus, a method for processing information, and a program, and in particular, to an information processing apparatus, a method for processing information, and a program capable of performing voice recognition with higher accuracy.

### BACKGROUND ART

In recent years, the use of a user interface using voice input has been widespread, and it has become important to improve the accuracy of a voice recognition result of voice recognition processing to enable better voice input.

Furthermore, in a case where the voice recognition result is incorrect, a more accurate voice recognition result can be obtained by prompting re-utterance and correcting the voice recognition result, for example. At this time, there have been proposed a technique for improving the voice recognition accuracy by making the re-utterance for correcting the voice recognition result in a phrase unit, and a technique for easily correcting the voice recognition result of the re-utterance by sectioning it by a phrase unit on the basis of sound information, for example.

For example, as disclosed in Patent Document 1, when a sentence expression is changed or added, it is possible to reduce burden on a user by preparing a sentence in a phrase unit including postpositional particles, predicates, and the like for words.

### CITATION LIST

### PATENT DOCUMENT

Patent Document 1: Japanese Patent Application Laid-Open No. 2012-053634

### SUMMARY OF THE INVENTION

### PROBLEMS TO BE SOLVED BY THE INVENTION

Incidentally, as described above, since it is important to improve the voice recognition accuracy, a technique capable of performing voice recognition processing with accuracy higher than before has been needed.

The present disclosure has been conceived in view of such a situation, and it is intended to enable voice recognition with higher accuracy.

### SOLUTIONS TO PROBLEMS

An information processing apparatus according to one aspect of the present disclosure includes: a voice recognition unit that obtains a word string representing utterance content as a voice recognition result by obtaining voice information obtained from utterance of a user and performing voice recognition on the voice information; a confidence level acquisition unit that obtains, at a time when the voice recognition unit performs the voice recognition on the voice information, a confidence level of each word recognized as the voice recognition result as an index representing a degree of reliability of the voice recognition result; a phrase unit determination unit that determines a phrase unit including a word with a low confidence level obtained by the confidence level acquisition unit; and an output processing unit that outputs voice recognition result information from which the phrase unit determined by the phrase unit determination unit is recognized together with the voice recognition result.

A method for processing information or a program according to one aspect of the present disclosure includes steps of: obtaining a word string representing utterance content as a voice recognition result by obtaining voice information obtained from utterance of a user and performing voice recognition on the voice information; obtaining, at a time when the voice recognition is performed on the voice information, a confidence level of each word recognized as the voice recognition result as an index representing a degree of reliability of the voice recognition result; determining a phrase unit including a word with a low confidence level; and outputting voice recognition result information from which the phrase unit is recognized together with the voice recognition result.

According to one aspect of the present disclosure, a word string representing utterance content is obtained as a voice recognition result by obtaining voice information obtained from utterance of a user and performing voice recognition on the voice information, and at the time when the voice recognition is performed on the voice information, a confidence level of each word recognized as the voice recognition result, which is an index representing a degree of reliability of the voice recognition result, is obtained. Then, a phrase unit including a word with a low confidence level is determined, and voice recognition result information from which the phrase unit is recognized is output together with the voice recognition result.

### EFFECTS OF THE INVENTION

According to one aspect of the present disclosure, voice recognition can be performed with higher accuracy.

### BRIEF DESCRIPTION OF DRAWINGS

Fig. 1 is a block diagram illustrating an exemplary configuration of a voice recognition system to which the present technology is applied according to an embodiment.
Fig. 2 is a block diagram illustrating a first exemplary configuration of a voice recognition server.
Fig. 3 is a diagram illustrating an example of phrase unit determination processing.
Fig. 4 is a diagram illustrating a pronunciation information table.
Fig. 5 is a diagram illustrating an example of voice recognition result output processing.
Fig. 6 is a flowchart illustrating a voice recognition process.
Fig. 7 is a flowchart illustrating a phrase unit determination process.
Fig. 8 is a flowchart illustrating a starting-end-word specifying process.
Fig. 9 is a flowchart illustrating a termination word specifying process.
Fig. 10 is a block diagram illustrating a second exemplary configuration of the voice recognition server.
Fig. 11 is a diagram illustrating a variation of the phrase unit determination processing.
Fig. 12 is a diagram illustrating a variation of a user interface for voice recognition.
Fig. 13 is a diagram illustrating a variation of the voice recognition result output processing.
Fig. 14 is a block diagram illustrating an exemplary configuration of a computer to which the present technology is applied according to an embodiment.

### MODE FOR CARRYING OUT THE INVENTION

Hereinafter, a specific embodiment to which the present technology is applied will be described in detail with reference to the accompanying drawings.

### <Exemplary Configuration of Voice Recognition System>

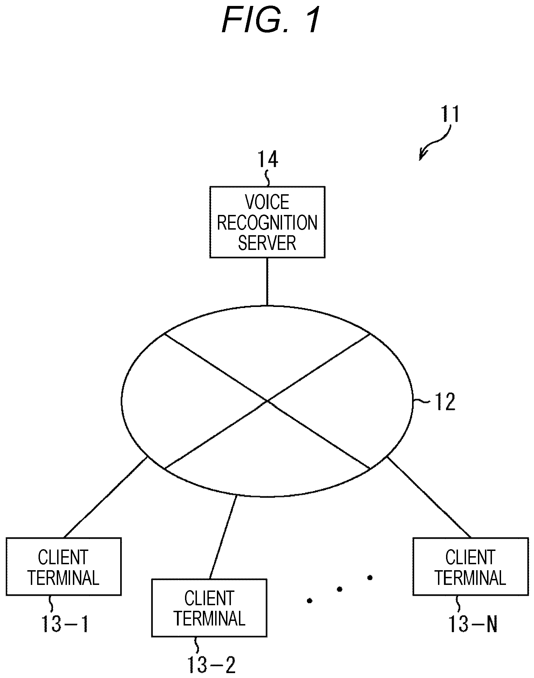

Fig. 1 is a block diagram illustrating an exemplary configuration of a voice recognition system to which the present technology is applied according to an embodiment.

As illustrated in Fig. 1, a plurality of (N in the example of Fig. 1) client terminals 13-1 to 13-N and a voice recognition server 14 are connected to a voice recognition system 11 via a network 12 such as the Internet. Note that the client terminals 13-1 to 13-N are configured in a manner similar to each other, and are referred to as a client terminal 13 as appropriate in a case where there is no need to distinguish from each other.

The client terminal 13 includes a voice information acquisition device, such as a microphone, in which voice uttered by a user is input to obtain voice information, and transmits the voice information obtained by the voice information acquisition device to a voice recognition server 14 via a network 12. Furthermore, the client terminal 13 receives a voice recognition result transmitted from the voice recognition server 14, and presents it to the user. For example, the client terminal 13 displays video (image) representing the voice recognition result on a video output device, and outputs synthetic voice representing the voice recognition result from a voice output device.

The voice recognition server 14 performs voice recognition processing on the voice information transmitted from the client terminal 13 via the network 12. Then, the voice recognition server 14 transmits, to the client terminal 13 via the network 12, a word string or the like recognized from the voice information as the voice recognition result. At this time, the voice recognition server 14 can transmit the voice recognition result not only to the client terminal 13 from which the voice information is transmitted, but also to another client terminal 13 of another user in communication with the user of the client terminal 13, for example.

The voice recognition system 11 is configured as described above, and the voice information obtained from utterance of the user of the client terminal 13 is transmitted to the voice recognition server 14, the voice recognition server 14 performs voice recognition processing, and the voice recognition result is transmitted to the client terminal 13. Therefore, the voice recognition system 11 can provide, even if the processing capacity of the individual client terminal 13 is low, the voice recognition processing with higher accuracy by implementing the latest high-performance voice recognition processing in the voice recognition server 14, for example.

### <First Exemplary Configuration of Voice Recognition Server>

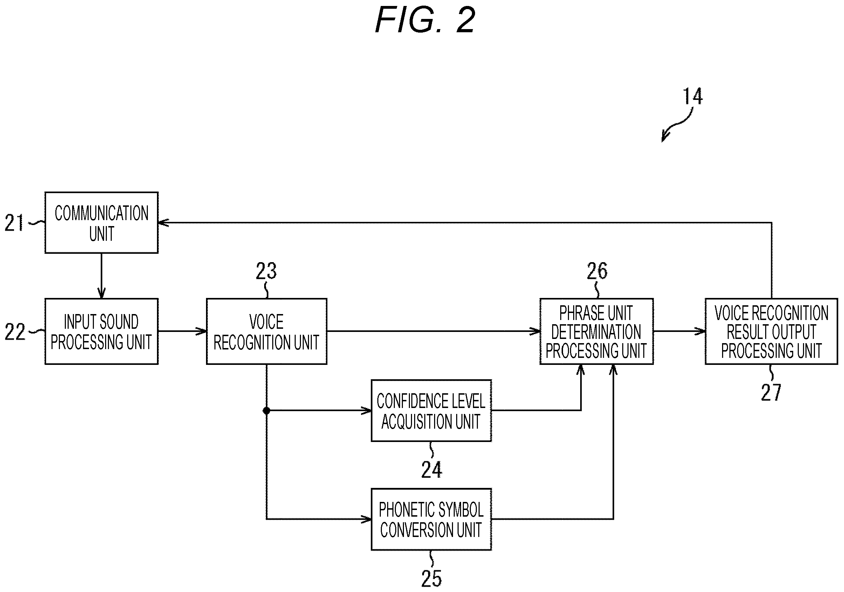

Fig. 2 is a block diagram illustrating a first exemplary configuration of the voice recognition server 14.

As illustrated in Fig. 2, the voice recognition server 14 includes a communication unit 21, an input sound processing unit 22, a voice recognition unit 23, a confidence level acquisition unit 24, a phonetic symbol conversion unit 25, a phrase unit determination processing unit 26, and a voice recognition result output processing unit 27.

The communication unit 21 performs various types of communication with the client terminal 13 via the network 12 in Fig. 1. For example, the communication unit 21 receives the voice information transmitted from the client terminal 13, and supplies it to the input sound processing unit 22. Furthermore, the communication unit 21 transmits the voice recognition result information supplied from the voice recognition result output processing unit 27 to the client terminal 13.

The input sound processing unit 22 performs various preprocessing on the voice information supplied from the communication unit 21, which is necessary before the voice recognition unit 23 performs voice recognition. For example, the input sound processing unit 22 performs voice activity detection (VAD) processing in which a section including no sound and a section including only noise within the voice information are excluded and an utterance section including uttered voice is detected, and supplies the voice information of the utterance section to the voice recognition unit 23.

The voice recognition unit 23 performs the voice recognition on the voice information supplied from the input sound processing unit 22, recognizes utterance content included in the voice information, and supplies a word string representing the utterance content to the phonetic symbol conversion unit 25 and the phrase unit determination processing unit 26.

The confidence level acquisition unit 24 obtains, when the voice recognition unit 23 performs the voice recognition on the voice information, a confidence level for each word as an index representing a degree of reliability with respect to the voice recognition result at the time when the voice recognition unit 23 recognizes words, and supplies it to the phrase unit determination processing unit 26. For example, the confidence level acquisition unit 24 can obtain the confidence level on the basis of a word graph generated in the process of the voice recognition performed by the voice recognition unit 23.

The phonetic symbol conversion unit 25 refers to a dictionary in which a word is associated with a phonetic symbol, for example, converts the word string supplied from the voice recognition unit 23 into phonetic symbols associated with respective words, and supplies them to the phrase unit determination processing unit 26.

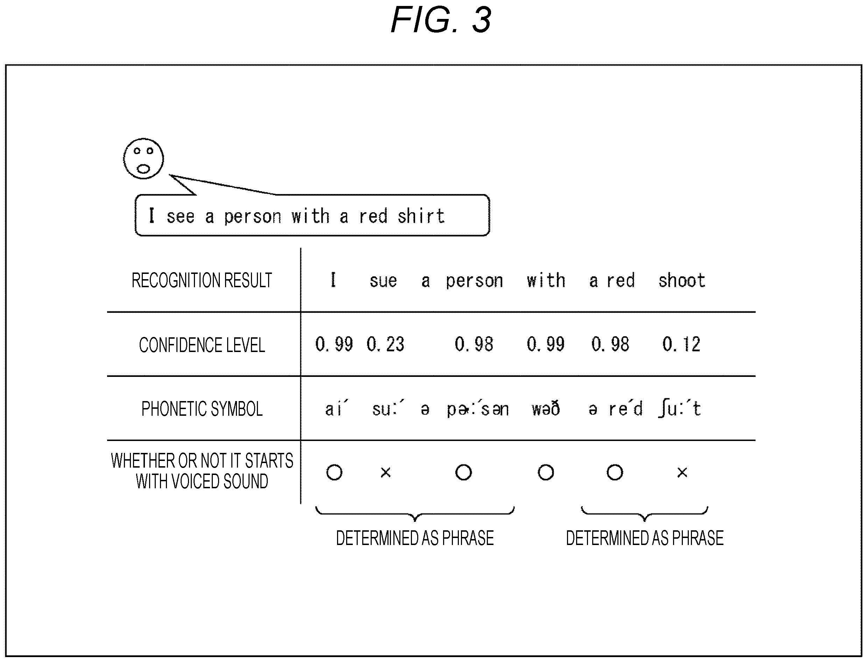

The phrase unit determination processing unit 26 performs, on the word string supplied from the voice recognition unit 23, phrase unit determination processing in which a phrase unit is determined as described later with reference to Fig. 3 on the basis of the confidence level supplied from the confidence level acquisition unit 24 and the phonetic symbols supplied from the phonetic symbol conversion unit 25. Here, the phrase unit is configured by one or more words obtained by sectioning the word string recognized by the voice recognition unit 23 into, for example, each part to be preferably uttered collectively when the user is prompted to make re-utterance. For example, the phrase unit determination processing unit 26 obtains the confidence level of the voice recognition result in a certain unit (a unit of "article + word" in English language, and "morpheme + postpositional particle or auxiliary verb" in Japanese language), and in a case where there is a word a with low confidence level, a phrase unit is determined from words around the word.

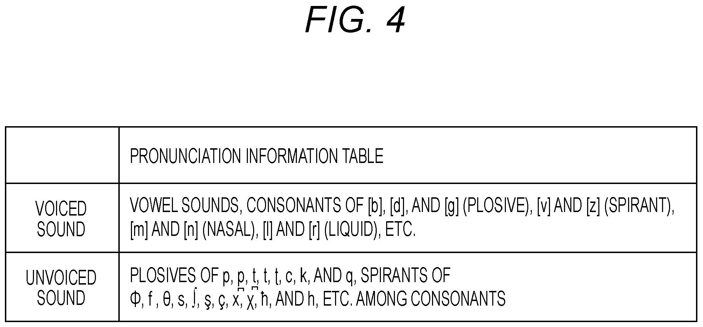

Furthermore, the phrase unit determination processing unit 26 can refer to a pronunciation information table in which a voiced sound and an unvoiced sound are associated with phonetic symbols as illustrated in Fig. 4 on the basis of the phonetic symbols converted by the phonetic symbol conversion unit 25, and can determine the phrase unit. In other words, the phrase unit determination processing unit 26 sequentially selects the word arranged before the word with a low confidence level from the word immediately preceding the word with a low confidence level, and specifies a starting-end word of the phrase unit on the basis of whether or not the selected word starts with a voiced sound. Likewise, the phrase unit determination processing unit 26 sequentially selects the word arranged after the word with a low confidence level from the word immediately following the word with the low confidence level, and specifies a termination word of the phrase unit on the basis of determination on whether or not the selected word starts with a voiced sound.

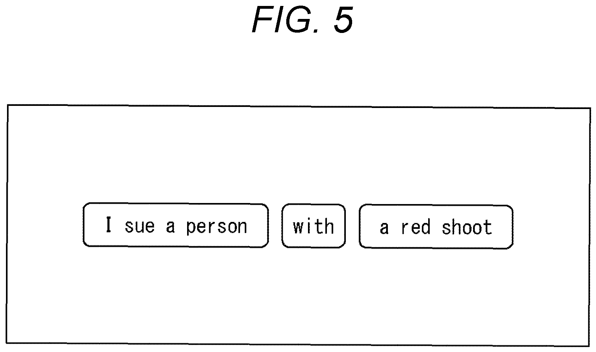

The voice recognition result output processing unit 27 is a user interface for allowing the user to recognize the phrase unit determined by the phrase unit determination processing unit 26, which performs voice recognition result output processing in which voice recognition result information for allowing the user of the client terminal 13 to recognize the phrase unit together with the voice recognition result is generated and output. For example, the voice recognition result output processing unit 27 generates and outputs display information for displaying a user interface (see Fig. 5) in which characters representing the voice recognition result are clearly indicated to be in a sectioned state in the phrase unit, or generates and outputs synthetic voice information for outputting synthetic voice representing the voice recognition result sectioned in the phrase unit.

The voice recognition server 14 is configured as described above, and the voice recognition is performed on the voice information transmitted from the client terminal 13, a phrase unit for sectioning the recognized word string is determined, and the voice recognition result in which the word string is sectioned in the phrase unit can be transmitted to the client terminal 13. Accordingly, in a case where the voice recognition result presented to the user with the client terminal 13 includes an incorrect word, it is possible to prompt the user to make re-utterance in the phrase unit including the incorrectly recognized word.

Therefore, as compared with a case where the voice recognition is performed in a word unit, for example, the voice recognition server 14 can correct the voice recognition result to include a correct word to output it as a result of performing the voice recognition in the phrase unit. In this manner, since the voice recognition result can be corrected, the voice recognition server 14 can consequently perform the voice recognition with higher accuracy.

### <Phrase Unit Determination Processing and Voice Recognition Result Output Processing>

An example of phrase unit determination processing performed by the phrase unit determination processing unit 26 will be described with reference to FIGS. 3 to 5.

As illustrated in Fig. 3, for example, it is assumed that a voice recognition result of "I sue a person with a red shoot" is obtained by the voice recognition unit 23 on the basis of the voice information "I see a person with a red shirt" uttered by the user. At this time, the confidence level acquisition unit 24 obtains the confidence level "0.99" for the word "I" in the voice recognition result, obtains the confidence level "0.23" for the word "sue", and obtains the confidence level "0.98" for the word "person". Likewise, the confidence level acquisition unit 24 obtains the confidence level "0.99" for the word "with", obtains the confidence level "0.98" for the word "red", and obtains the confidence level "0.12" for the word "shoot". Furthermore, the phonetic symbol conversion unit 25 converts each word of the voice recognition result into the phonetic symbols as illustrated.

Then, the phrase unit determination processing unit 26 refers to the pronunciation information table in Fig. 4 on the basis of the phonetic symbols converted by the phonetic symbol conversion unit 25, and determines the phrase unit such that a word starting with a voiced sound is arranged at both the front and the back of the word with the low confidence level. Alternatively, the phrase unit determination processing unit 26 may determine the phrase unit such that a word starting with a voiced sound is arranged in at least one of the front and the back of the word with the low confidence level.

For example, the phrase unit determination processing unit 26 determines, as a phrase unit, "I sue a person" in which the word "I" starting with the voiced sound is arranged before the word "sue" with the low confidence level and the word "person" starting with the voiced sound is arranged after the word "sue". Furthermore, the phrase unit determination processing unit 26 determines, as a phrase unit, "a red shoot" in which the word "red" starting with the voiced sound is arranged before the word "shoot" as the word "shoot" with the low confidence level is arranged at the end.

Note that, for example, the phrase unit determination processing unit 26 may specify, on the basis of the confidence level, a word with a high confidence level as a starting-end-word and a termination word in a phrase unit including a word with a low confidence level. Alternatively, the phrase unit determination processing unit 26 may specify the starting-end-word and the termination word in the phrase unit including the word with the low confidence level on the basis of both the confidence level and phonetic symbols.

Fig. 5 illustrates a user interface displayed on a video output device of the client terminal 13 as an example of voice recognition result output processing performed by the voice recognition result output processing unit 27.

For example, it is assumed that, as described above with reference to Fig. 3, the phrase unit is determined by the phrase unit determination processing unit 26 with respect to the voice recognition result of "I sue a person with a red shoot" obtained by the voice recognition unit 23. In this case, the voice recognition result output processing unit 27 performs the voice recognition result output processing for outputting the display information for displaying the voice recognition result on the user interface clearly indicating that the voice recognition result is sectioned into the phrase unit "I sue a person" and the phrase unit "a red shoot". Accordingly, as illustrated in Fig. 5, for example, the user interface in which the phrase unit "I sue a person" and the phrase unit "a red shoot" are surrounded by different frames is displayed on the video output device of the client terminal 13.

In this manner, when the user is prompted to make re-utterance to redo the voice recognition of the word with the incorrect voice recognition result using the user interface clearly sectioned in the phrase unit, the user can easily make the re-utterance in the phrase unit.

Therefore, the voice recognition unit 23 performs the voice recognition with respect to the re-uttered voice information in the phrase unit including the incorrect word, whereby more accurate voice recognition result can be obtained compared with, for example, a case where only the incorrect word is uttered.

### <Voice Recognition Processing>

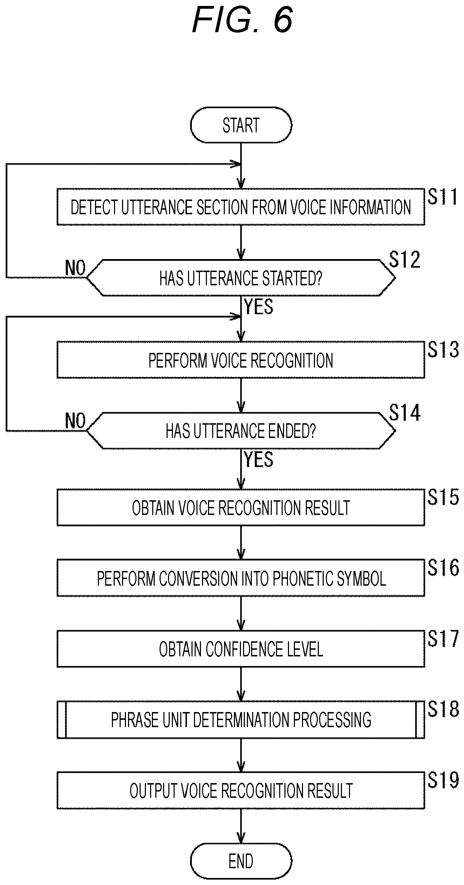

Fig. 6 is a flowchart illustrating a voice recognition process executed in the voice recognition server 14.

For example, when the communication unit 21 receives the voice information transmitted from the client terminal 13 via the network 12 and supplies it to the input sound processing unit 22, the process is started. In step S11, the input sound processing unit 22 performs processing of detecting an utterance section including the voice uttered by the user of the client terminal 13 from the voice information supplied from the communication unit 21.

In step S12, the input sound processing unit 22 determines whether or not the utterance of the user of the client terminal 13 has started according to the detection result of the utterance section in the processing in step S11. In step S12, in a case where the input sound processing unit 22 determines that the utterance has not started, the process returns to step S11, and the process is suspended until it is determined that the utterance has started. On the other hand, in step S12, in a case where the input sound processing unit 22 determines that the utterance of the user of the client terminal 13 has started, the process proceeds to step S13.

In step S13, the input sound processing unit 22 supplies the voice information in the utterance section to the voice recognition unit 23, and the voice recognition unit 23 performs the voice recognition on the voice information.

In step S14, the input sound processing unit 22 determines whether or not the utterance of the user of the client terminal 13 has ended. In step S14, in a case where the input sound processing unit 22 determines that the utterance has not ended, the process returns to step S13, and the voice recognition performed by the voice recognition unit 23 continues. On the other hand, in step S14, in a case where the input sound processing unit 22 determines that the utterance of the user of the client terminal 13 has ended, the process proceeds to step S15.

In step S15, as a voice recognition result based on the voice recognition in step S13, which is based on the voice information from the start to the end of the utterance, the voice recognition unit 23 obtains the word string representing the utterance content included in the voice information. Then, the voice recognition unit 23 supplies the voice recognition result to the phonetic symbol conversion unit 25 and the phrase unit determination processing unit 26.

In step S16, the phonetic symbol conversion unit 25 converts the word string supplied from the voice recognition unit 23 in step S15 into phonetic symbols for each word, and supplies them to the phrase unit determination processing unit 26.

In step S17, the confidence level acquisition unit 24 obtains the confidence level for each word when the voice recognition unit 23 performs the voice recognition in step S13, and supplies it to the phrase unit determination processing unit 26.

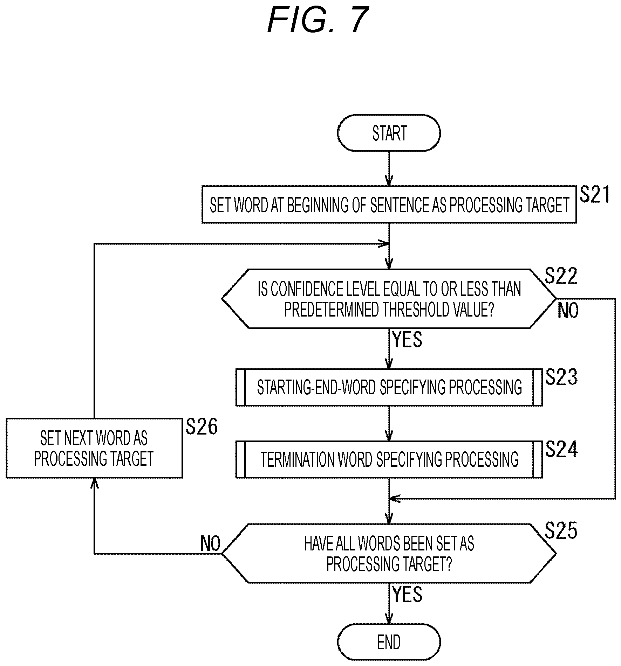

In step S18, the phrase unit determination processing unit 26 performs, on the word string supplied from the voice recognition unit 23 in step S15, phrase unit determination processing (flowchart in Fig. 7 as described later) on the basis of the phonetic symbols supplied from the phonetic symbol conversion unit 25 in step S16 and the confidence level supplied from the confidence level acquisition unit 24 in step S17. Then, the phrase unit determination processing unit 26 supplies the phrase unit determined in the phrase unit determination processing to the voice recognition result output processing unit 27 together with the word string.

In step S19, the voice recognition result output processing unit 27 outputs the voice recognition result information for displaying the user interface in which it is clearly indicated that the word string recognized by the voice recognition unit 23 is sectioned by the phrase unit determined by the phrase unit determination processing unit 26. Then, the communication unit 21 transmits the voice recognition result information output from the voice recognition result output processing unit 27 to the client terminal 13 via the network 12, and then the voice recognition process is terminated.

Fig. 7 is flowchart illustrating the phrase unit determination processing in step S18 in the voice recognition process in Fig. 6.

In the phrase unit determination process, for example, processing is performed sequentially from the word at the beginning of the sentence of the word string recognized by the voice recognition unit 23. In step S21, the phrase unit determination processing unit 26 first sets the word at the beginning of the sentence as a processing target.

In step S22, the phrase unit determination processing unit 26 determines whether or not the confidence level obtained for the word to be processed is equal to or less than a predetermined threshold value.

In step S22, in a case where the phrase unit determination processing unit 26 determines that the confidence level is equal to or less than the predetermined threshold value, the process proceeds to step S23.

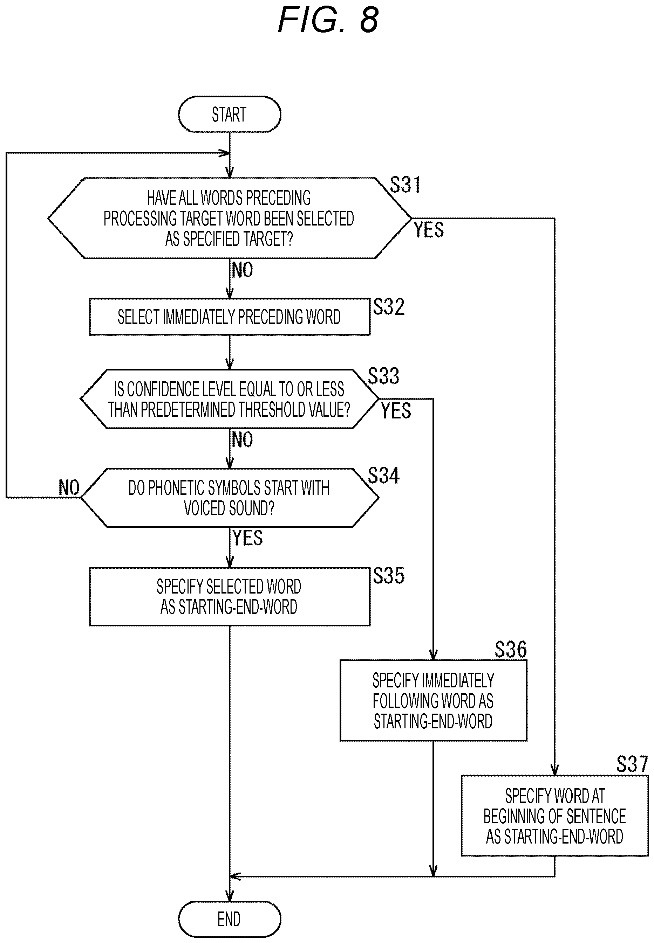

In step S23, the phrase unit determination processing unit 26 performs starting-end-word specifying processing (flowchart in Fig. 8 as described later) for specifying a starting-end-word to be the starting-end of the phrase unit in which the word to be processed is included.

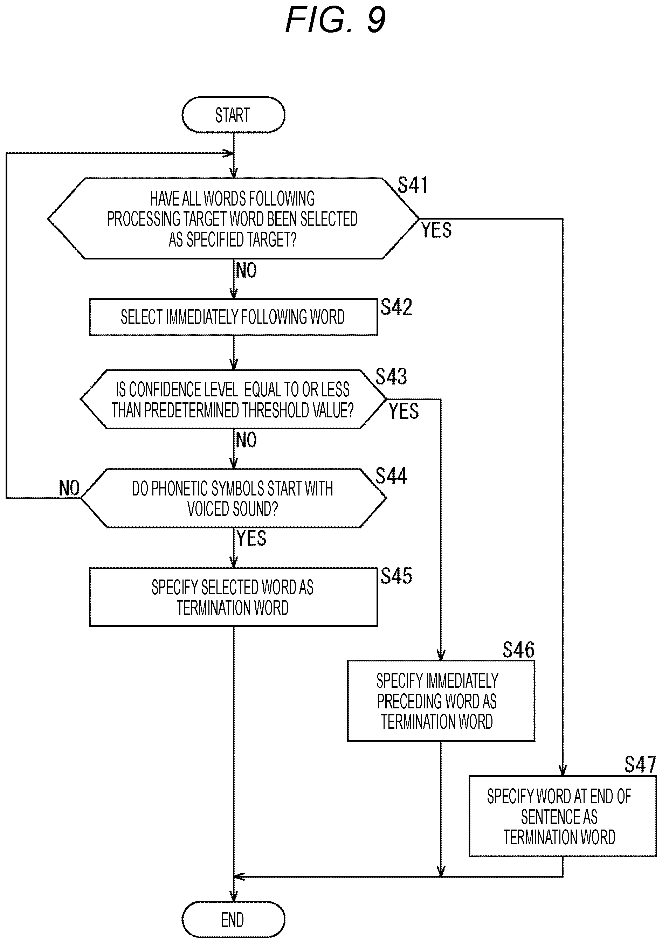

In step S24, the phrase unit determination processing unit 26 performs termination word specifying processing (flowchart in Fig. 9 as described later) for specifying a termination word to be the terminal of the phrase unit in which the word to be processed is included.

After the processing in step S24, or in a case where the phrase unit determination processing unit 26 determines that the confidence level is not equal to or less than the predetermined threshold value (i.e., the confidence level is larger than the predetermined threshold value) in step S22, the process proceeds to step S25.

In step S25, the phrase unit determination processing unit 26 determines whether or not all the words included in the word string recognized by the voice recognition unit 23 have been set to the processing target.

In step S25, in a case where the phrase unit determination processing unit 26 determines that all the words have not been set to the processing target, in other words, in a case where there is a word that has not been set to the processing target, the process proceeds to step S26.

In step S26, the phrase unit determination processing unit 26 newly sets a word next to the word that is currently the processing target as a processing target. Then, the process returns to step S22, and the similar process is repeated for the word newly set as the processing target.

On the other hand, in step S25, in a case where the phrase unit determination processing unit 26 determines that all the words have been set to the processing target, the phrase unit determination process is terminated.

Fig. 8 is flowchart illustrating the starting-end-word specifying processing in step S23 in the phrase unit determination process in Fig. 7.

In step S31, the phrase unit determination processing unit 26 determines whether or not all the words preceding the word to be processed have been selected as targets for specifying the starting-end-word.

In step S31, in a case where the phrase unit determination processing unit 26 determines that all the words preceding the word to be processed have not been selected as the targets for specifying the starting-end-word, the process proceeds to step S32. In other words, in this case, there is a word not selected as a target for specifying the starting-end-word before the word to be processed.

In step S32, the phrase unit determination processing unit 26 selects the immediately preceding word as a target for specifying the starting-end-word. For example, in a case where the starting-end-word specifying processing is performed for the first time, the phrase unit determination processing unit 26 selects the word immediately preceding the word to be processed in step S21 or S26 in Fig. 7 as a target for specifying the starting-end-word. Furthermore, in a case where the starting-end-word specifying processing is performed for the second time or later, the phrase unit determination processing unit 26 selects the word immediately preceding the word currently being selected as a target for specifying the starting-end-word.

In step S33, the phrase unit determination processing unit 26 determines whether or not the confidence level of the word selected in the immediately preceding step S32 is equal to or less than a predetermined threshold value.

In step S33, in a case where the phrase unit determination processing unit 26 determines that the confidence level of the selected word is not equal to or less than the predetermined threshold value (i.e., the confidence level is larger than the predetermined threshold value), the process proceeds to step S34.

In step S34, the phrase unit determination processing unit 26 determines whether or not the phonetic symbols of the selected word start with a voiced sound according to the phonetic symbols supplied from the phonetic symbol conversion unit 25.

In step S34, in a case where the phrase unit determination processing unit 26 determines that the phonetic symbols of the selected word start with a voiced sound, the process proceeds to step S35. In step S35, the phrase unit determination processing unit 26 specifies the selected word as a starting-end-word.

On the other hand, in a case where the phrase unit determination processing unit 26 determines that the phonetic symbols of the selected word does not start with a voiced sound in step S34, in other words, the phonetic symbols of the selected word start with an unvoiced sound, the process returns to step S31, and the similar process is repeated thereafter.

Furthermore, in step S33, in a case where the phrase unit determination processing unit 26 determines that the confidence level of the selected word is equal to or less than the predetermined threshold value, the process proceeds to step S36.

In step S36, the phrase unit determination processing unit 26 specifies, as a starting-end-word, the word immediately following the word selected as a target for specifying the starting-end-word at this point. Note that, for example, in a case where the starting-end-word specifying processing is performed for the first time, the word immediately preceding the word to be processed is selected as a target for specifying the starting-end-word, and the word to be processed immediately following the selected word is specified as a starting-end-word.

On the other hand, in step S31, in a case where the phrase unit determination processing unit 26 determines that all the words preceding the word to be processed have been selected as the targets for specifying the starting-end-word, the process proceeds to step S37.

In step S37, the phrase unit determination processing unit 26 specifies the word at the beginning of the sentence of the word string recognized by the voice recognition unit 23 as a starting-end-word.

After the processing in step S35, step S36, or step S37, the starting-end-word specifying process is terminated.

Fig. 9 is flowchart illustrating the termination word specifying processing in step S24 in the phrase unit determination process in Fig. 7.

In step S41, the phrase unit determination processing unit 26 determines whether or not all the words following the word to be processed have been selected as targets for specifying the termination word.

In step S41, in a case where the phrase unit determination processing unit 26 determines that all the words following the word to be processed have not been selected as the targets for specifying the termination word, the process proceeds to step S42. In other words, in this case, there is a word that has not been selected as a target for specifying the termination word after the word to be processed.

In step S42, the phrase unit determination processing unit 26 selects the immediately following word as a target for specifying the termination word. For example, in a case where the termination word specifying processing is performed for the first time, the phrase unit determination processing unit 26 selects the word immediately following the word to be processed in step S21 or S26 in Fig. 7 as a target for specifying the termination word. Furthermore, in a case where the termination word specifying processing is performed for the second time or later, the phrase unit determination processing unit 26 selects the word immediately following the word currently being selected as a target for specifying the termination word.

In step S43, the phrase unit determination processing unit 26 determines whether or not the confidence level of the word selected in the immediately preceding step S42 is equal to or less than a predetermined threshold value.

In step S43, in a case where the phrase unit determination processing unit 26 determines that the confidence level of the selected word is not equal to or less than the predetermined threshold value (i.e., the confidence level is larger than the predetermined threshold value), the process proceeds to step S44.

In step S44, the phrase unit determination processing unit 26 determines whether or not the phonetic symbols of the selected word start with a voiced sound according to the phonetic symbols supplied from the phonetic symbol conversion unit 25.

In step S44, in a case where the phrase unit determination processing unit 26 determines that the phonetic symbols of the selected word start with a voiced sound, the process proceeds to step S45. In step S45, the phrase unit determination processing unit 26 specifies the selected word as a termination word.

On the other hand, in a case where the phrase unit determination processing unit 26 determines that the phonetic symbols of the selected word does not start with a voiced sound in step S44, in other words, the phonetic symbols of the selected word start with an unvoiced sound, the process returns to step S41, and the similar process is repeated thereafter.

Furthermore, in step S43, in a case where the phrase unit determination processing unit 26 determines that the confidence level of the selected word is equal to or less than the predetermined threshold value, the process proceeds to step S46.

In step S46, the phrase unit determination processing unit 26 specifies, as a termination word, the word immediately preceding the word selected as a target for specifying the termination word at this point. Note that, for example, in a case where the termination word specifying processing is performed for the first time, the word immediately following the word to be processed is selected as a target for specifying the termination word, and the word to be processed immediately preceding the selected word is specified as a termination word.

On the other hand, in step S41, in a case where the phrase unit determination processing unit 26 determines that all the words following the word to be processed have been selected as the targets for specifying the termination word, the process proceeds to step S47.

In step S47, the phrase unit determination processing unit 26 specifies the word at the end of the sentence of the word string recognized by the voice recognition unit 23 as a termination word.

After the processing in step S45, step S46, or step S47, the termination word specifying process is terminated.

As described above, the voice recognition server 14 determines the phrase unit though the phrase unit determination processing at the time of performing the voice recognition on the voice information transmitted from the client terminal 13, whereby the user interface by which the phrase unit can be recognized together with the voice recognition result can be presented. Accordingly, it is possible to cause the user to make re-utterance in the phrase unit, whereby more accurate voice recognition result can be obtained.

### <Second Exemplary Configuration of Voice Recognition Server>

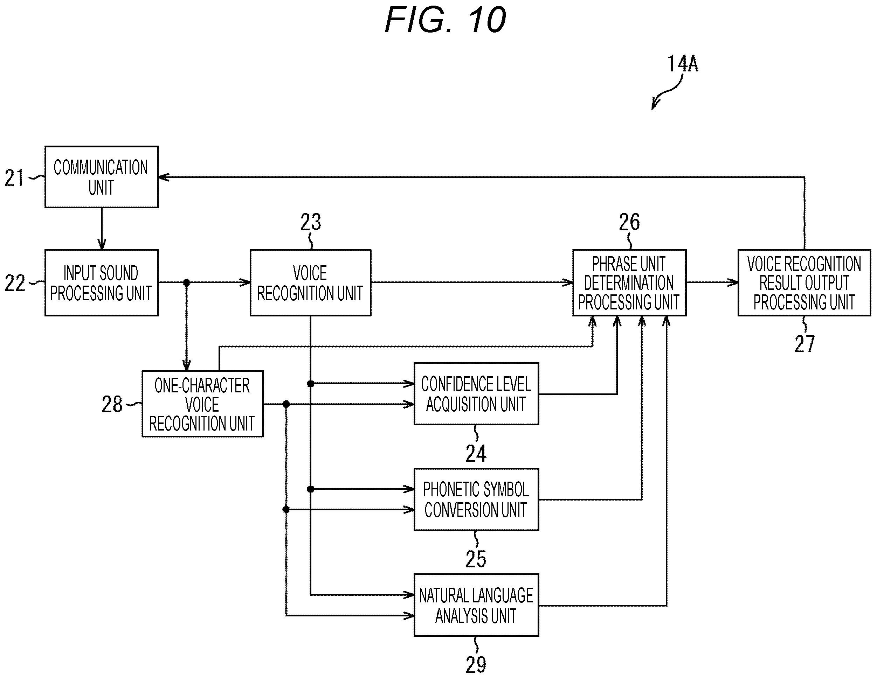

Fig. 10 is a block diagram illustrating a second exemplary configuration of the voice recognition server 14. Note that, in a voice recognition server 14A illustrated in Fig. 10, configurations common to the voice recognition server 14 in Fig. 2 are denoted by the same reference numerals, and detailed descriptions thereof are omitted.

As illustrated in Fig. 10, the voice recognition server 14A has a configuration common to the voice recognition server 14 in Fig. 2 in that it includes the communication unit 21, the input sound processing unit 22, the voice recognition unit 23, the confidence level acquisition unit 24, the phonetic symbol conversion unit 25, the phrase unit determination processing unit 26, and the voice recognition result output processing unit 27. Moreover, the voice recognition server 14A includes a one-character voice recognition unit 28, and a natural language analysis unit 29.

The one-character voice recognition unit 28 is capable of performing voice recognition on the voice information supplied from the input sound processing unit 22 in a unit of one character. For example, the one-character voice recognition unit 28 includes a voice recognition engine specialized for the voice recognition in the unit of one character as compared with the voice recognition unit 23.

For example, in the voice recognition server 14A, in a case where the word starting with a voiced sound as described above cannot be specified at the time of determining the phrase unit including the word with a low confidence level, the phrase unit determination processing unit 26 determines the phrase unit including only the word with the low confidence level. In other words, in this case, re-utterance of only the word with the low confidence level is prompted. Thereafter, when the input sound processing unit 22 obtains the voice information associated with the re-utterance, the input sound processing unit 22 supplies the voice information associated with the word with the low confidence level to the one-character voice recognition unit 28, and causes the one-character voice recognition unit 28 to perform voice recognition.

As a result, at the time of determining the phrase unit including the word with the low confidence level, even if the phrase unit including only the word is determined, the accuracy of the voice recognition can be improved compared with a case where the voice recognition unit 23 is caused to perform the voice recognition on the re-utterance.

The voice recognition result obtained by the voice recognition unit 23 having performed the voice recognition on the voice information is supplied to the natural language analysis unit 29. Then, the natural language analysis unit 29 performs natural language analysis on the voice recognition result, and obtains sentence elements (sentence components) of the words included in the voice recognition result as an analysis result.

As described above with reference to Fig. 3, in a case where the voice recognition result of "I sue a person with a red shoot" is obtained by the voice recognition unit 23, the natural language analysis unit 29 obtains sentence elements for each word included in the voice recognition result. For example, the natural language analysis unit 29 obtains the analysis result in which the word "I" is a noun (subject), the word "sue" is a verb, the word "a" is an article, the word "person" is a noun (object), the word "with" is a preposition, the word "a" is an article, the word "red" is an adjective, and the word "shoot" is a noun.

Then, the phrase unit determination processing unit 26 can determine the phrase unit on the basis of the language structure according to such sentence elements. For example, the phrase unit determination processing unit 26 determines "I sue a person" as a phrase unit on the basis of the strongly connected language structure of a subject, a verb, and an object. Furthermore, the phrase unit determination processing unit 26 determines "a red shoot" as a phrase unit on the basis of the strongly connected language structure of an article, an adjective, and a noun, for example.

In this manner, in a case where the phrase unit is determined on the basis of the language structure, the phrase unit determination processing unit 26 may select, in the strongly connected language structure of a subject, a verb, and an object, a word starting with an unvoiced sound as a starting-end-word or a termination word.

For example, an exemplary case where the voice recognition unit 23 obtains the voice recognition result of "She prays with her hair" on the basis of the voice information "She plays with her hair" uttered by the user will be described.

In this case, for example, the natural language analysis unit 29 obtains the analysis result in which the word "She" is a noun (subject), the word "prays" is a verb, the word "with" is a preposition, the word "her" is a noun (object), and the word "hair" is a noun (object). At this time, the confidence level of the word "prays" is low, and the phrase unit determination processing unit 26 performs processing for determining the phrase unit including the word "prays".

Then, even if the word "She" preceding the word "prays" with a low confidence level does not start with a voiced sound, the phrase unit determination processing unit 26 can determine that it is a strongly connected language structure of a subject and a verb and the connection between sounds is strong. Therefore, the phrase unit determination processing unit 26 selects the word "She" not starting with a voiced sound as a starting-end-word, and can determine "She plays with" as a phrase unit.

### <Variations>

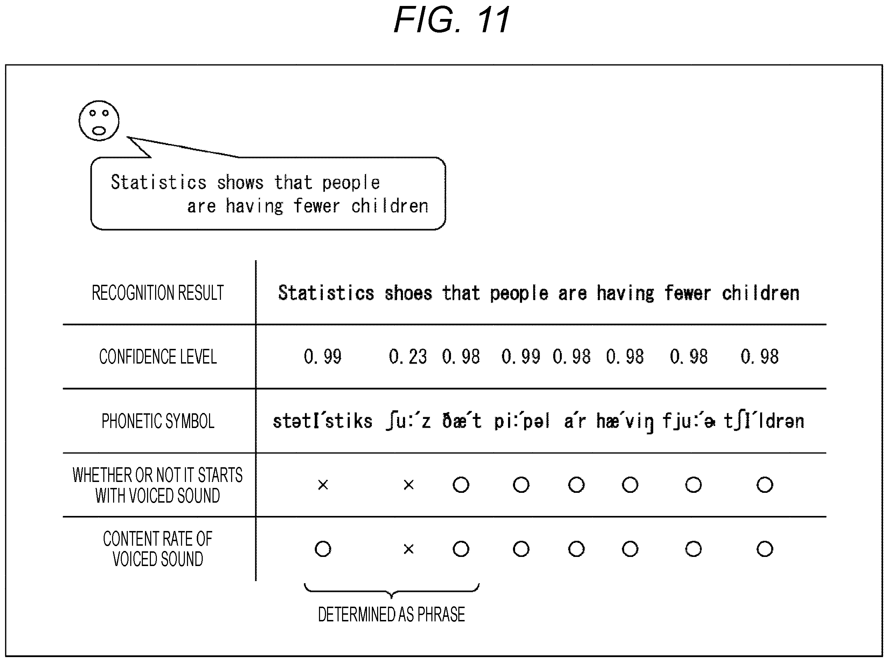

A variation of the phrase unit determination processing will be described with reference to Fig. 11.

As described above, at the time of determining the phrase unit, the phrase unit determination processing unit 26 performs processing on the basis of whether or not it is a word starting with a voiced sound. This is because voice recognition can be performed on the word starting with a voiced sound with higher accuracy than on a word starting with an unvoiced sound. In addition, for example, in a case where relatively a large number of voiced sounds (e.g., more than half of all words) is included, it is considered that the voice recognition can be performed with high accuracy even if the word starts with an unvoiced sound.

Therefore, the phrase unit determination processing unit 26 can determine the phrase unit by specifying the word starting with an unvoiced sound and including a relatively large number of voiced sounds as a starting-end-word or a termination word.

For example, as illustrated in Fig. 11, it is assumed that the voice recognition unit 23 has obtained the voice recognition result of "Statistics shoes that people are having fewer children" on the basis of the voice information "Statistics shows that people are having fewer children" uttered by the user. At this time, although the word "Statistics" does not start with a voiced sound, it can be determined that the content rate of voiced sounds is high, and the phrase unit determination processing unit 26 can determine the word "Statistics" as a starting-end-word and the word "Statistics shows that" as a phrase unit.

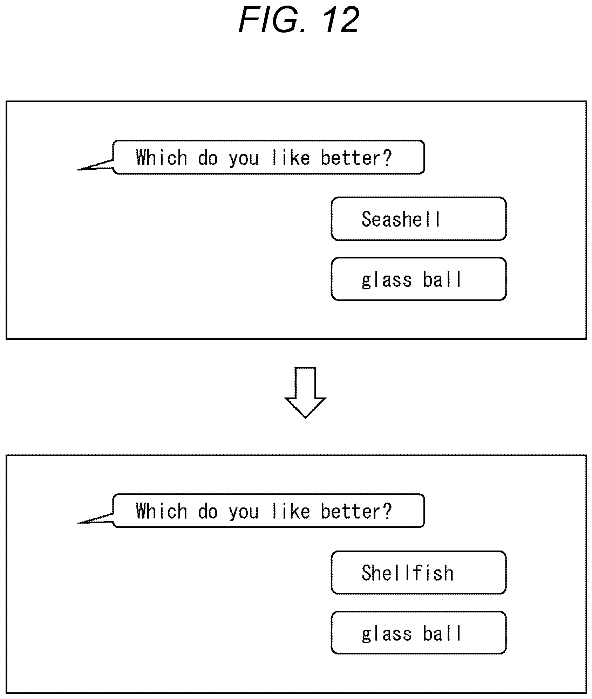

A variation of the user interface for voice recognition will be described with reference to Fig. 12.

Fig. 12 illustrates an exemplary user interface in a system that allows the user to select the content to be uttered and input voice. As illustrated in the upper part of Fig. 12, the voice recognition system 11 can be applied to the system that allows the user to utter either the option "Seashell" or the option "glass ball" in response to the question "Which do you like better?". However, the option "Seashell" includes a large number of unvoiced sounds, and it is assumed that the accuracy of the voice recognition is lowered.

In this manner, in a case where it is assumed that the accuracy of the voice recognition is lowered, the voice recognition system 11 can change the option to a word having a meaning similar to the option "Seashell" and including a large number of voiced sounds. In other words, as illustrated in the lower part of Fig. 12, the voice recognition system 11 can change the option "Seashell" to the option "Shellfish". Accordingly, the voice recognition can be performed with higher accuracy by making the user utter the option "Shellfish" including voiced sounds more than that of the option "Seashell".

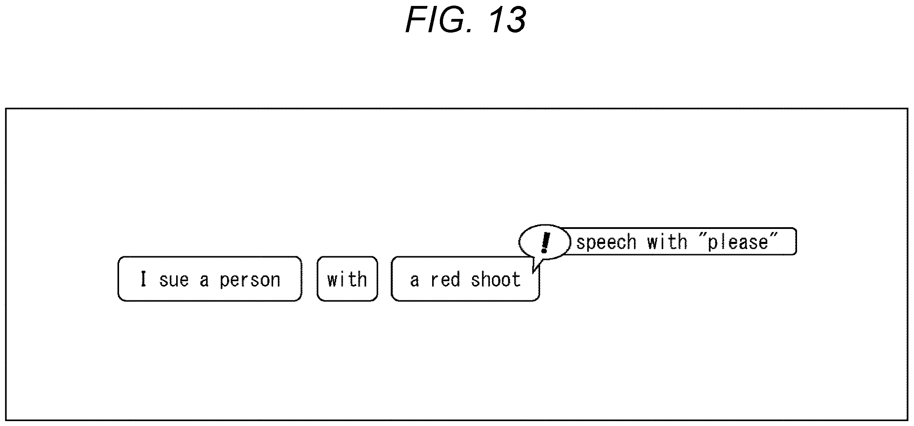

A variation of the voice recognition result output processing will be described with reference to Fig. 13.

Fig. 13 illustrates a variation of the user interface output by the voice recognition result output processing unit 27.

For example, as described with reference to Fig. 5, the user interface in which it is clearly indicated to be sectioned into the phrase unit "I sue a person" and the phrase unit "a red shoot" is presented to the user, whereby the re-utterance of the phrase unit "a red shoot" can be prompted. However, in this case, since the termination word starts with an unvoiced sound, it is considered that the accuracy of the voice recognition with respect to the re-utterance is difficult to greatly improve.

Accordingly, as illustrated in Fig. 13, the voice recognition result output processing unit 27 can output the user interface that adds a warning sentence "speech with "please"" after the phrase unit "a red shoot" in which the word starting with an unvoiced sound is a termination word. In other words, in a case where the termination word in the phrase unit starts with an unvoiced sound, the user interface prompting utterance for adding, after the termination word, a word that does not influence the sentence and starts with a voiced sound is presented. As a result, when the user makes the re-utterance of "I see a person with a red shirt please", since the termination word starts with a voiced sound, the accuracy of the voice recognition with respect to the re-utterance is greatly improved.

Note that, in a case where the starting-end-word in the phrase unit starts with an unvoiced sound, similarly, the user interface prompting re-utterance for adding, before the starting-end-word, a word that does not influence the sentence and starts with a voiced sound may be presented.

Note that each processing described with reference to the flowcharts described above is not necessarily processed in a time series manner in the order illustrated in the flowchart, and may be executed in parallel or individually (e.g., parallel processing or object processing). Furthermore, the program may be processed by one central processing unit (CPU), or may be subjected to distributed processing by a plurality of CPUs.

Furthermore, the series of processing described above (method for processing information) may be executed by hardware or by software. In a case where the series of processing is executed by software, a program constituting the software is installed from a program recording medium in which the program is recorded into a computer incorporated in dedicated hardware or, for example, a general-purpose personal computer or the like capable of executing various functions by installing various programs therein.

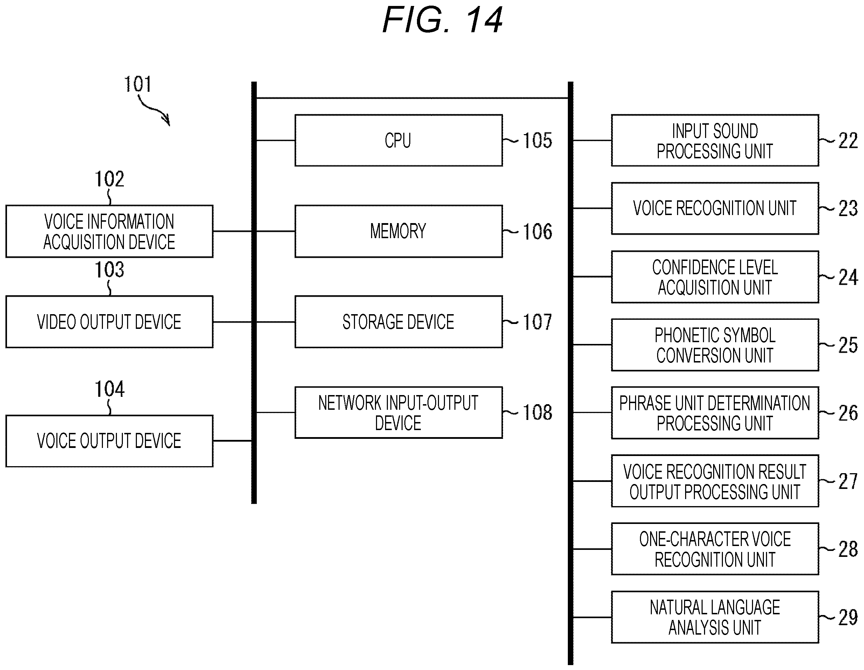

Fig. 14 is a block diagram illustrating an exemplary hardware configuration of a computer that executes, using a program, the series of processing described above.

Here, a computer 101 illustrated in Fig. 14 corresponds to, for example, the client terminal 13 in Fig. 1, which has an exemplary configuration capable of performing voice recognition processing using the client terminal 13 alone without performing processing via the network 12.

The computer 101 includes a voice information acquisition device 102, a video output device 103, a voice output device 104, a CPU 105, a memory 106, a storage device 107, and a network input-output device 108. Moreover, in a similar manner to the voice recognition server 14 illustrated in Fig. 2, the computer 101 includes the input sound processing unit 22, the voice recognition unit 23, the confidence level acquisition unit 24, the phonetic symbol conversion unit 25, the phrase unit determination processing unit 26, and the voice recognition result output processing unit 27. Moreover, in a similar manner to the voice recognition server 14A illustrated in Fig. 10, the computer 101 includes the one-character voice recognition unit 28 and the natural language analysis unit 29.

For example, the voice information acquisition device 102 includes a microphone, the video output device 103 includes a display, and the voice output device 104 includes a speaker. Furthermore, the network input-output device 108 corresponds to the communication unit 21 in Fig. 2, and is capable of performing communication according to the standard of the local area network (LAN), for example.

Then, in the computer 101, the CPU 105 loads the program stored in the storage device 107 into the memory 106 and executes it, thereby performing the series of processing described above.

Note that the program to be executed by the CPU 105 may be provided by recording it in package media including, for example, a magnetic disk (including a flexible disk), an optical disk (e.g., compact disc read only memory (CD-ROM) and digital versatile disc (DVD)), a magneto-optic disk, a semiconductor memory, or the like, or may be provided via a wired or wireless transmission medium by using the network input-output device 108.

Note that the present technology can also employ the following configurations.
(1) An information processing apparatus, including:
   a voice recognition unit that obtains a word string representing utterance content as a voice recognition result by obtaining voice information obtained from utterance of a user and performing voice recognition on the voice information;
   a confidence level acquisition unit that obtains, at a time when the voice recognition unit performs the voice recognition on the voice information, a confidence level of each word recognized as the voice recognition result as an index representing a degree of reliability of the voice recognition result;
   a phrase unit determination unit that determines a phrase unit including a word with a low confidence level obtained by the confidence level acquisition unit; and
   an output processing unit that outputs voice recognition result information from which the phrase unit determined by the phrase unit determination unit is recognized together with the voice recognition result.
(2) The information processing apparatus according to (1) above, further including:
   a phonetic symbol conversion unit that converts the word string recognized as the voice recognition result into a phonetic symbol of each word, in which
   the phrase unit determination unit determines the phrase unit on the basis of the phonetic symbol converted by the phonetic symbol conversion unit.
(3) The information processing apparatus according to (2) above, in which
   the phrase unit determination unit refers to the phonetic symbol converted by the phonetic symbol conversion unit, and specifies a word starting with a voiced sound as a word to be a starting end or a terminal of the phrase unit.
(4) The information processing apparatus according to (3) above, in which
   the phrase unit determination unit sequentially selects a word arranged before the word with a low confidence level from a word immediately preceding the word with a low confidence level, and specifies a starting-end word of the phrase unit on the basis of whether or not the selected word starts with a voiced sound.
(5) The information processing apparatus according to (3) or (4) above, in which
   the phrase unit determination unit sequentially selects a word arranged after the word with a low confidence level from a word immediately following the word with a low confidence level, and specifies a termination word of the phrase unit on the basis of whether or not the selected word starts with a voiced sound.
(6) The information processing apparatus according to any one of (1) to (5) above, further including:
   a natural language analysis unit that performs natural language analysis on a sentence including the word string recognized as the voice recognition result, in which
   the phrase unit determination unit refers to an analysis result obtained by the natural language analysis unit, and determines the phrase unit on the basis of a strongly connected language structure.
(7) The information processing apparatus according to any one of (1) to (6) above, further including:
   a one-character voice recognition unit that performs voice recognition on the voice information in a unit of one character, in which
   after the phrase unit including only the word with a low confidence level is determined by the phrase unit determination unit, the one-character voice recognition unit performs voice recognition on voice information re-uttered with respect to the word with a low confidence level.
(8) The information processing apparatus according to any one of (1) to (7) above, in which
   in a case where a starting-end word or a termination word of the phrase unit does not start with a voiced sound, the output processing unit causes a user interface for prompting re-utterance in which a word that does not influence a sentence and starts with a voiced sound is added before or after the phrase unit to be presented.
(9) The information processing apparatus according to any one of (1) to (8) above, further including:
   a communication unit that communicates with another apparatus via a network; and
      an input sound processing unit that performs processing for detecting an utterance section in which the voice information includes voice, in which
   the communication unit obtains the voice information transmitted from the other apparatus via the network and supplies the voice information to the input sound processing unit, and
   the voice recognition result information output from the output processing unit is transmitted to the other apparatus via the network.
(10) A method for processing information, including steps of:
   obtaining a word string representing utterance content as a voice recognition result by obtaining voice information obtained from utterance of a user and performing voice recognition on the voice information;
   obtaining, at a time when the voice recognition is performed on the voice information, a confidence level of each word recognized as the voice recognition result as an index representing a degree of reliability of the voice recognition result;
   determining a phrase unit including a word with a low confidence level; and
   outputting voice recognition result information from which the phrase unit is recognized together with the voice recognition result.
(11) A program for causing a computer to execute information processing including steps of:
   obtaining a word string representing utterance content as a voice recognition result by obtaining voice information obtained from utterance of a user and performing voice recognition on the voice information;
   obtaining, at a time when the voice recognition is performed on the voice information, a confidence level of each word recognized as the voice recognition result as an index representing a degree of reliability of the voice recognition result;
   determining a phrase unit including a word with a low confidence level; and
   outputting voice recognition result information from which the phrase unit is recognized together with the voice recognition result.

Note that the present embodiment is not limited to the embodiment described above, and various modifications are possible without departing from the gist of the present disclosure.

### REFERENCE SIGNS LIST

- 11: Voice recognition system
- 12: Network
- 13: Client terminal
- 14: Voice recognition server
- 21: Communication unit
- 22: Input sound processing unit
- 23: Voice recognition unit
- 24: Confidence level acquisition unit
- 25: Phonetic symbol conversion unit
- 26: Phrase unit determination processing unit
- 27: Voice recognition result output processing unit
- 28: One-character voice recognition unit
- 29: Natural language analysis unit
- 101: Computer
- 102: Voice information acquisition device
- 103: Video output device
- 104: Voice output device
- 105: CPU
- 106: Memory
- 107: Storage device
- 108: Network input-output device

## Claims

1. An information processing apparatus, comprising:
a voice recognition unit that obtains a word string representing utterance content as a voice recognition result by obtaining voice information obtained from utterance of a user and performing voice recognition on the voice information;
a confidence level acquisition unit that obtains, at a time when the voice recognition unit performs the voice recognition on the voice information, a confidence level of each word recognized as the voice recognition result as an index representing a degree of reliability of the voice recognition result;
a phrase unit determination unit that determines a phrase unit including a word with a low confidence level obtained by the confidence level acquisition unit; and
an output processing unit that outputs voice recognition result information from which the phrase unit determined by the phrase unit determination unit is recognized together with the voice recognition result.

2. The information processing apparatus according to claim 1, further comprising:
a phonetic symbol conversion unit that converts the word string recognized as the voice recognition result into a phonetic symbol of each word, wherein
the phrase unit determination unit determines the phrase unit on the basis of the phonetic symbol converted by the phonetic symbol conversion unit.

3. The information processing apparatus according to claim 2, wherein
the phrase unit determination unit refers to the phonetic symbol converted by the phonetic symbol conversion unit, and specifies a word starting with a voiced sound as a word to be a starting end or a terminal of the phrase unit.

4. The information processing apparatus according to claim 2, wherein
the phrase unit determination unit sequentially selects a word arranged before the word with a low confidence level from a word immediately preceding the word with a low confidence level, and specifies a starting-end word of the phrase unit on the basis of whether or not the selected word starts with a voiced sound.

5. The information processing apparatus according to claim 2, wherein
the phrase unit determination unit sequentially selects a word arranged after the word with a low confidence level from a word immediately following the word with a low confidence level, and specifies a termination word of the phrase unit on the basis of whether or not the selected word starts with a voiced sound.

6. The information processing apparatus according to claim 1, further comprising:
a natural language analysis unit that performs natural language analysis on a sentence including the word string recognized as the voice recognition result, wherein
the phrase unit determination unit refers to an analysis result obtained by the natural language analysis unit, and determines the phrase unit on the basis of a strongly connected language structure.

7. The information processing apparatus according to claim 1, further comprising:
a one-character voice recognition unit that performs voice recognition on the voice information in a unit of one character, wherein
after the phrase unit including only the word with a low confidence level is determined by the phrase unit determination unit, the one-character voice recognition unit performs voice recognition on voice information re-uttered with respect to the word with a low confidence level.

8. The information processing apparatus according to claim 1, wherein
in a case where a starting-end word or a termination word of the phrase unit does not start with a voiced sound, the output processing unit causes a user interface for prompting re-utterance in which a word that does not influence a sentence and starts with a voiced sound is added before or after the phrase unit to be presented.

9. The information processing apparatus according to claim 1, further comprising:
a communication unit that communicates with another apparatus via a network; and
an input sound processing unit that performs processing for detecting an utterance section in which the voice information includes voice, wherein
the communication unit obtains the voice information transmitted from the other apparatus via the network and supplies the voice information to the input sound processing unit, and
the voice recognition result information output from the output processing unit is transmitted to the other apparatus via the network.

10. A method for processing information, comprising steps of:
obtaining a word string representing utterance content as a voice recognition result by obtaining voice information obtained from utterance of a user and performing voice recognition on the voice information;
obtaining, at a time when the voice recognition is performed on the voice information, a confidence level of each word recognized as the voice recognition result as an index representing a degree of reliability of the voice recognition result;
determining a phrase unit including a word with a low confidence level; and
outputting voice recognition result information from which the phrase unit is recognized together with the voice recognition result.

11. A program for causing a computer to execute information processing comprising steps of:
obtaining a word string representing utterance content as a voice recognition result by obtaining voice information obtained from utterance of a user and performing voice recognition on the voice information;
obtaining, at a time when the voice recognition is performed on the voice information, a confidence level of each word recognized as the voice recognition result as an index representing a degree of reliability of the voice recognition result;
determining a phrase unit including a word with a low confidence level; and
outputting voice recognition result information from which the phrase unit is recognized together with the voice recognition result.
